Europäisches Patentamt

European Patent Office

Office européen des brevets

(11) Veröffentlichungsnummer: **0 047 368**
**B1**

(12) **EUROPÄISCHE PATENTSCHRIFT**

(45) Veröffentlichungstag der Patentschrift:
04.01.84

(51) Int. Cl.³: **G 11 B 5/62, H 01 F 1/113**

(21) Anmeldenummer: **81105335.4**

(22) Anmeldetag: **09.07.81**

(54) **Nadelförmiges magnetisches Eisenoxid und Verfahren zu seiner Herstellung.**

(30) Priorität: **01.08.80 DE 3029203**

(43) Veröffentlichungstag der Anmeldung:
**17.03.82 Patentblatt 82/11**

(45) Bekanntmachung des Hinweises auf die Patenterteilung:
**04.01.84 Patentblatt 84/1**

(84) Benannte Vertragsstaaten:
**DE FR GB NL**

(56) Entgegenhaltungen:
**DE - A - 2 318 271**
**DE - A - 2 451 276**
**DE - A - 2 801 395**
**GB - A - 594 681**
**US - A - 3 903 004**

(73) Patentinhaber: **BASF Aktiengesellschaft,**
**Carl-Bosch-Strasse 38, D-6700 Ludwigshafen (DE)**

(72) Erfinder: **Rudolf, Peter, Dr., Wiesenstrasse 11,**
**D-6701 Neuhofen (DE)**
Erfinder: **Kovacs, Jenoe, Dr., Robert-Koch-Strasse 18,**
**D-6712 Bobenheim-Roxheim (DE)**
Erfinder: **Jakusch, Helmut, Dr., Lorscher Ring 6C,**
**D-6710 Frankenthal (DE)**

ACTORUM AG

Nadelförmiges magnetisches Eisenoxid und Verfahren zu seiner Herstellung.

Die Erfindung betrifft ein modifiziertes nadelförmiges magnetisches Eisenoxid mit einer gegenüber dem Ausgangsmaterial erhöhten Koerzitivfeldstärke, ein Verfahren zu seiner Herstellung sowie seine Verwendung zur Herstellung von magnetischen Aufzeichnungsträgern.

Nadelförmiges Gamma-Eisen(III)oxid wird in grossem Umfang als magnetisierbares Material bei der Herstellung von magnetischen Aufzeichnungsträgern seit langem eingesetzt. Durch die Fortentwicklung auf dem Gebiet der Aufzeichnungstechnik wurde jedoch zunehmend nach magnetischen Materialien gesucht, die sich durch eine höhere Koerzitivfeldstärke gegenüber dem Gamma-Eisen(III)oxid auszeichnen. Es war zwar bekannt, dass sich die Koerzitivfeldstärke von Eisenoxiden durch die Dotierung mit Kobalt beträchtlich erhöhen lässt, doch zeigen solche Materialien eine Reihe von unerwünschten Eigenschaften. Hierzu gehören insbesondere die thermische und mechanische Instabilität von Remanenz und Koerzitivkraft. Materialien mit solchen Nachteilen sind jedoch für den Einsatz bei magnetischen Aufzeichnungsträgern wenig geeignet.

Es war daher ein lang angestrebtes Ziel, entsprechende Materialien mit hoher Koerzitivfeldstärke, aber ohne die genannten Nachteile, zu erhalten. So beschreibt die US-PS 3 903 004 die Verringerung der Temperaturabhängigkeit der magnetischen Eigenschaften von kobaltmodifiziertem Gamma-Eisen(III)oxid durch ein Verfahren, bei welchem gleichzeitig mit dem Kobalthydroxid auch ein solches aus der Reihe von Cu, Li, Pb, Sn, Ba, Cd, Sr oder In auf den Goethit aufgefällt und dann in üblicher Weise weiterverarbeitet wird. In ähnlicher Weise wird auch bei dem in der DE-OS 28 01 395 beschriebenen Verfahren vorgegangen, wobei eine Reihe von Elementen, unter ihnen auch Cadmium, auf den Goethit aufgefällt werden. Dies kann auch bereits bei der Ausfällung des Goethits erfolgen wie es u.a. auch in der DE-OS 23 18 271 angegeben wird. Diese Modifizierung von magnetischen Eisenoxiden durch Volumendotierung bewirkt jedoch nur eine Einschränkung der durch den Gehalt an Kobalt verursachten Stabilitätsprobleme.

Es bestand daher die Aufgabe, modifizierte nadelförmige magnetische Eisenoxide bereitzustellen, welche ohne Kobaltdotierung und ohne die damit verbundenen Nachteile eine gegenüber dem Ausgangsmaterial erhöhte Koerzitivfeldstärke aufweisen und dennoch die vorgegebenen Eigenschaften des Ausgangsmaterials, insbesondere bezüglich mechanischer Stabilität und Dispergierbarkeit beibehalten.

Es wurde nun gefunden, dass nadelförmige magnetische Eisenoxide die geforderten Eigenschaften besitzen, wenn sie aus einem Kern aus Gamma-Eisen(III)oxid und einer diesen Kern umhüllenden äusseren Schicht aus einem mit Cadmiumionen modifizierten Magnetit bestehen und, bezogen auf das gesamte modifizierte Gamma-Eisen(III)oxid, 0,1 bis 15 Gewichtsprozent Eisen(II)ionen sowie 0,1 bis 10 Gewichtsprozent Cadmiumionen enthalten und dadurch hergestellt werden, dass nadelförmiges Gamma-Eisen(III)-oxid in Wasser suspendiert, unter Inertgasatmosphäre dieser Suspension zugegebene Eisen(II)ionen sowie Cadmiumionen mittels wässriger Basen bei Temperaturen zwischen 8 und 100 °C als Hydroxide ausgefällt, der gesamte Feststoffanteil abfiltriert, mit Wasser neutral gewaschen und während 1/2 bis 10 Stunden bei einer Temperatur unterhalb 360 °C getrocknet und getempert wird.

Als Ausgangsmaterialien für dieses erfindungsgemässe Verfahren eignen sich die nach bekannten Methoden hergestellten nadelförmigen magnetischen Gamma-Eisen(III)-oxide mit einer mittleren Teilchenlänge zwischen 0,1 und 1,5 µm sowie einem Verhältnis von Länge zu Dicke von 6:1 bis 30:1. Mechanisch stabile Oxide mit einer guten Dispergierbarkeit in organischen Bindemittelsystemen werden bevorzugt. Erhalten werden diese Gamma-Eisen(III)oxid-Teilchen durch Umwandlung von nadelförmigem Eisen(III)oxidhydrat in reduzierender Atmosphäre zu Magnetit und anschliessender Oxidation zum Gamma-Eisen(III)oxid bei Temperaturen unterhalb 400 °C gegeben. Gegebenenfalls kann zur Verbesserung der mechanischen und magnetischen Eigenschaften vor wie auch nach der Reduktion eine Temperbehandlung vorgenommen werden. Auch die Behandlung der verschiedenen Eisenoxid-Vorstufen bei der Herstellung des Gamma-Eisen(III)oxides mit anorganischen oder organischen Substanzen, z.B. zur Erhöhung der Formstabilität der Teilchen ist möglich und kann sich im besonderen Fall als vorteilhaft herausstellen. Die Herstellung eines geeigneten Gamma-Eisen(III) oxids lässt sich auch dadurch erreichen, dass ein nadelförmiges unmagnetisches Eisenoxid oder Eisenoxidhydrat mit höheren Kohlenwasserstoffen, höheren Alkoholen oder Aminen, Fettsäuren und deren Salze überzogen und bei einer Temperatur von etwa 400 bis 650 °C in Gegenwart von Luft umgewandelt wird. Die für das erfindungsgemässe Verfahren erforderlichen Eisen(II)- und Cadmium(II)-Verbindungen müssen so ausgewählt werden, dass sie in wässriger alkalischer Lösung nicht oxidierend wirken und die entsprechenden Hydroxide bilden. Zweckmässigerweise werden jeweils die Chloride eingesetzt.

Zur Durchführung des Verfahrens wird das Gamma-Eisen(III)oxid in Wasser durch intensives Rühren oder mit Hilfe anderer üblicher Geräte suspendiert. Ein Verhältnis von 3 bis 10 Gewichtsteile Wasser je Gewichtsteil Oxid hat sich dabei als zweckmässig herausgestellt. In dem für die Bereitung der Suspension eingesetzten Wasser kann die erforderliche Menge an Cadmiumsalz bereits gelöst sein, es ist jedoch auch die Zugabe zur fertigen Suspension ohne Nachteil möglich. Anschliessend wird bei einer Temperatur von 8 bis 100 °C, vorzugsweise 20 bis 65 °C durch Zugabe wässriger Basen, üblicherweise 48%iger Natronlauge, das Cadmium-Hydroxid auf die Eisenoxidnadeln aufgefällt. Diese Zugabe der wässrigen Base hat in einer solchen Menge zu erfolgen, dass nach dem anschliessenden Eintropfen einer wässrigen Eisen(II)salzlösung, im allgemeinen einer Eisen(II)-chloridlösung, der pH-Wert der Suspension grösser 10, vorzugsweise grösser 12 ist. Der gesamte Reaktionsablauf wird unter Inertgasabdeckung vorgenommen. Vor dem Abfiltrieren und Auswaschen des gesamten Feststoffs wird noch 2 bis 6 Stunden intensiv gerührt. Zuletzt wird der Filterkuchen 1/2 bis 10 Stunden bei Temperaturen zwischen 100 und 360 °C getrocknet und getempert. Die Trocknung und Temperung wird unter Inertgas durchgeführt, vorteilhafterweise bei Temperaturen zwischen 100 und 280 °C, vorzugsweise zwischen 150 und 250 °C.

Nach diesem Verfahren lassen sich von Gamma-Eisen(III)-oxid ausgehend die erfindungsgemässen nadelförmigen magnetischen Eisenoxide herstellen. Sie zeichnen sich insbesondere durch Werte für die Koerzitivfeldstärke aus, welche nach dem Stand der Technik nur durch Modifikation der Eisenoxide mit Kobalt erreicht werden. Ausserdem ist es aufgrund des erfindungsgemässen Verfahrens möglich, die vorteilhaften Eigenschaften des jeweils eingesetzten Gamma-Eisen(III)-oxid beizubehalten. Auf diese Weise lassen sich somit Ausgangsmaterialien, welche sich durch hohe mechanische Stabilität, enge Teilchengrössenverteilung und gute magnetische Ausrichtbarkeit auszeichnen, auch noch hinsichtlich der Koerzitivfeldstärke wesentlich verbessern.

Diese erfindungsgemässen nadelförmigen magnetischen Eisenoxide eignen sich insbesondere zur Verwendung bei der Herstellung von magnetischen Aufzeichnungsträgern, wodurch sich alle von der Koerzitivfeldstärke beeinflussten elektroakustischen Parameter entsprechend vorteilhaft verändern lassen. Die Herstellung dieser Aufzeichnungsträger geschieht in an sich bekannter Weise. Hierzu werden die magnetischen Materialien in polymeren Bindemitteln dispergiert. Als Bindemittel eignen sich die für diesen Zweck bekannte Verbindungen, wie Homo- und Mischpolymerisate von Vinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die Erfindung sei anhand nachfolgender Beispiele näher erläutert.

Die magnetischen Werte der Materialien wurden in einem Schwingmagnetometer bei einer Feldstärke von 160 kA/m gemessen, und zwar die Koerzitivfeldstärke $H_c$ in kA/m, umgerechnet auf eine Stopfdichte von $\rho = 1,2$ mg/mm$^3$ ($H_{c(\rho=1,2)}$), die spezifische Remanenz $M_{r/\rho}$ und die spezifische Sättigungsmagnetisierung $M_{m/\rho}$ in nTm$^3$/g.

Beispiel A 1

1000 g eines nadelförmigen $\gamma$-Fe$_2$O$_3$ mit einem mittleren Längen-zu-Dickenverhältnis von 10,5, einer mittleren Länge von 0,5 μm und einer Koerzitivfeldstärke von 23,2 kA/m werden in 3 l Wasser, in welchem zuvor 38,48 g CdCl$_2$·2H$_2$O, d.h. 2% Cd, bezogen auf eingesetztes $\gamma = $ Fe$_2$O$_3$, gelöst worden sind, suspendiert. Danach werden unter starkem Rühren und unter N$_2$-Abdeckung 350 ml 48%ige Natronlauge zugetropft. Anschliessend werden 70 g Fe(II)ionen als 391 ml technische FeCl$_2$-Lösung innerhalb von 45 Minuten zugegeben. Es wird noch 6 Stunden bei 40 °C gerührt. Daraufhin wird der Feststoff abfiltriert und mit Wasser alkali- und chloridfrei gewaschen. Der feuchte Filterkuchen wird anschliessend in zwei Teile geteilt und wie folgt getrocknet und getempert:

Teil A 1/I wird bei 200 °C in N$_2$-Strom getrocknet und getempert.

Teil A 1/II wird bei 250 °C im N$_2$-Strom getrocknet und getempert.

Die magnetischen Messwerte und der titrimetrisch ermittelte Fe(II)gehalt sind in Tabelle 1 angegeben.

Beispiel A 2

700 g des Oxids aus Beispiel A 1 werden in 2,45 l Wasser suspendiert, in dem zuvor 37,61 g CdCl$_2$·H$_2$O = 3% gelöst worden sind. Unter N$_2$-Abdeckung und heftigem Rühren werden 200 ml einer 48%igen Natronlauge zugetropft. Anschliessend werden 52,5 g (Fe(II)ionen entsprechend 272 ml technischer FeCl$_2$-Lösung innerhalb 30 Minuten zugegeben. Es wird noch sechs Stunden bei 40 °C gerührt. Daraufhin wird der Feststoff abfiltriert und mit Wasser alkali- und chloridfrei gewaschen. Der feuchte Filterkuchen wird anschliessend in 5 Teile zerlegt und wie folgt getrocknet und getempert.

| | |
|---|---|
| Teil A 2/I | bei 150 °C im N$_2$-Strom zwei Stunden |
| Teil A 2/II | bei 200 °C im N$_2$-Strom zwei Stunden |
| Teil A 2/III | bei 250 °C im N$_2$-Strom zwei Stunden |
| Teil 2 2/IV | bei 300 °C im N$_2$-Strom zwei Stunden |
| Teil A 2/V | bei 350 °C im N$_2$-Strom zwei Stunden |

Die magnetischen Messwerte und der titrimetrisch ermittelte Eisen(II)gehalt der Pigmentpulver sind in Tabelle 1 angegeben.

Beispiel A 3

500 g des Oxids aus Beispiel A 1 werden in 1,5 l H$_2$O suspendiert, in dem zuvor 44,78 g CdCl$_2$·H$_2$O = 5% (bezogen auf eingesetztes Oxid) gelöst worden sind. Unter N$_2$-Abdeckung und heftigem Rühren werden 200 ml 48%ige Natronlauge zugetropft. Anschliessend werden 50 g Eisen(II)ionen entsprechend 271 ml technischer Eisen(II)chloridlösung innerhalb von 30 Minuten zugegeben. Es wird noch 6 Stunden bei 45 °C gerührt. Daraufhin wird der Feststoff abfiltriert und mit Wasser alkali- und chloridfrei gewaschen. Der feuchte Filterkuchen wird anschliessend in 4 Teile zerlegt und wie folgt getrocknet und getempert.

Teil A 3/I    bei 150 °C im $N_2$-Strom zwei Stunden
Teil A 3/II   bei 180 °C im $N_2$-Strom zwei Stunden
Teil A 3/III  bei 200 °C im $N_2$-Strom zwei Stunden
Teil A 3/IV   bei 250 °C im $N_2$-Strom zwei Stunden

Die magnetischen Messwerte und der titrimetrisch ermittelte Fe(II)gehalt der Pigmentpulver sind in Tabelle 1 angegeben.

Beispiel A 4

Es wird wie im Beispiel A 2 verfahren, jedoch mit dem Unterschied, dass 159 $CdCl_2 \cdot H_2O$ = 8%, 70 g Fe(II)ionen – 363 ml technischer $FeCl_2$-Lösung und 320 ml 48%ige Natronlauge verwendet werden. Der Filterkuchen wird in 5 Teile zerlegt und wie folgt getrocknet und getempert.

Teil A 4/I    bei 150 °C im $N_2$-Strom zwei Stunden
Teil A 4/II   bei 200 °C im $N_2$-Strom zwei Stunden
Teil A 4/III  bei 250 °C im $N_2$-Strom zwei Stunden
Teil A 4/IV   bei 300 °C im $N_2$-Strom zwei Stunden
Teil A 4/V    bei 350 °C im $N_2$-Strom zwei Stunden

Die magnetischen Messwerte und der titrimetrisch ermittelte Fe(II)gehalt der Pigmentpulver sind in Tabelle 1 angegeben.

Tabelle 1

| Beispiel | Temperatur-Behandlung | $M_m/\rho$ | $M_r/\rho$ | $M_r/M_m$ | $H_c$ ($\rho$=1,2) | Fe(II) % |
|---|---|---|---|---|---|---|
| A 1/I | 200 °C/$N_2$ 2 h | 83 | 42 | 0,51 | 27,6 | 5,5 |
| A 1/II | 250 °C/$N_2$ 2 h | 83 | 43 | 0,52 | 26,6 | 6,3 |
| A 2/I | 150 °C/$N_2$ 2 h | 80 | 39 | 0,49 | 25,4 | 4,6 |
| A 2/II | 200 °C/$N_2$ 2 h | 76 | 37 | 0,49 | 25,3 | 5,1 |
| A 2/III | 250 °C/$N_2$ 2 h | 80 | 39 | 0,49 | 25,6 | 5,0 |
| A 2/IV | 300 °C/$N_2$ 2 h | 81 | 40 | 0,49 | 27,9 | 5,0 |
| A 2/V | 350 °C/$N_2$ 2 h | 75 | 37 | 0,49 | 27,0 | 5,7 |
| A 3/I | 150 °C/$N_2$ 2 h | 82 | 40 | 0,49 | 26,3 | 6,7 |
| A 3/II | 180 °C/$N_2$ 2 h | 83 | 42 | 0,51 | 28,5 | 6,2 |
| A 3/III | 200 °C/$N_2$ 2 h | 82 | 41 | 0,50 | 28,8 | 6,3 |
| A 3/IV | 250 °C/$N_2$ 2 h | 82 | 42 | 0,51 | 29,0 | 7,4 |
| A 4/I | 150 °C/$N_2$ 2 h | 80 | 40 | 0,50 | 30,8 | 5,2 |
| A 4/II | 200 °C/$N_2$ 2 h | 77 | 40 | 0,52 | 31,9 | 6,2 |
| A 4/III | 250 °C/$N_2$ 2 h | 77 | 40 | 0,52 | 32,8 | 6,5 |
| A 4/IV | 300 °C/$N_2$ 2 h | 78 | 40 | 0,51 | 29,0 | 7,1 |
| A 4/V | 350 °C/$N_2$ 2 h | 83 | 39 | 0,47 | 32,2 | 10,6 |

Vergleichsversuch B 1

Es wird wie in Beispiel A 1 beschrieben verfahren, jedoch wird der feuchte Filterkuchen zwei Stunden bei 400 °C im $N_2$-Strom getrocknet und getempert. Die Messergebnisse sind in Tabelle 2 angegeben.

Vergleichsversuch B 2

Es wird wie in Beispiel A 3 beschrieben verfahren, jedoch wird der feuchte Filterkuchen zwei Stunden bei 400 °C im $N_2$-Strom getrocknet und getempert. Die Messergebnisse sind in Tabelle 2 angegeben.

Vergleichsversuch C 1

150 g des Ausgangsoxides aus Beispiel A 1 werden in 1,2 l $H_2O$ unter starkem Rühren suspendiert, 8,05 g $CdCl_2H_2O$ = 3% Cd werden hinzugefügt. Es werden 5 ml einer 48%igen Natronlauge zugetropft und danach sechs Stunden bei 30 °C gerührt. Der Feststoff wird abfiltriert, neutral und chloridfrei gewaschen und anschliessend in drei Teile zerlegt. Er wird wie folgt getrocknet und getempert:

Teil C 1/I     150 °C im $N_2$-Strom zwei Stunden
Teil C 1/II    250 °C im $N_2$-Strom zwei Stunden
Teil C 1/III   350 °C im $N_2$-Strom zwei Stunden

Die Messergebnisse sind in Tabelle 2 aufgeführt.

Vergleichsversuch C 2

Es wird wie in Versuch C 1 verfahren, jedoch wird die Suspension nach der Fällung vier Stunden bei 95 °C gerührt. Der Filterkuchen wird in zwei Teile zerlegt und wie folgt getrocknet und getempert:

Teil C 2/I     150 °C im $N_2$-Strom zwei Stunden
Teil C 2/II     250 °C im $N_2$-Strom zwei Stunden

Die Messergebnisse sind ebenfalls in Tabelle 2 aufgeführt.

Vergleichsversuch D 1

1000 g des nadelförmigen Basisoxides aus Beispiel A 1 werden in 3 l Wasser suspendiert. Unter heftigem Rühren werden 500 ml 48%ige Natronlauge zugesetzt. Hernach wird die Suspension innerhalb von 30 Minuten mit 70 g Fe(II)ionen = 382 ml technische $FeCl_2$-Lösung versetzt. Es wird noch 6 Stunden bei 40 °C gerührt. Der Feststoffanteil wird abfiltriert, mit Wasser alkali- und chloridfrei gewaschen und hernach in 3 Teile zerlegt, die wie folgt getrocknet und getempert werden:

Teil D 1/I     150 °C im $N_2$-Strom zwei Stunden
Teil D 1/II     250 °C im $N_2$-Strom zwei Stunden
Teil D 1/III     350 °C im $N_2$-Strom zwei Stunden

Die magnetischen Messwerte und der titrimetrische Fe(II)-gehalt des Pigmentpulvers sind in Tabelle 2 angegeben.

Tabelle 2

| Vergleichs-Versuch | Temperatur-Behandlung | $M_m/\rho$ | $M_r/\rho$ | $M_r/M_m$ | $H_c$ ($\rho=1,2$) | Fe(II) |
|---|---|---|---|---|---|---|
| B 1 | 400 °C/$N_2$ 2 h | 86 | 42 | 0,49 | 22,4 | 8,8 |
| B 2 | 400 °C/$N_2$ 2 h | 88 | 41 | 0,47 | 20,0 | 11,1 |
| C 1/I | 150 °C/$N_2$ 2 h | 81 | 39 | 0,48 | 22,6 | – |
| C 1/II | 250 °C/$N_2$ 2 h | 84 | 40 | 0,48 | 22,6 | – |
| C 1/III | 350 °C/$N_2$ 2 h | 83 | 41 | 0,49 | 24,8 | 3,6 |
| C 2/I | 150 °C/$N_2$ 2 h | 79 | 37 | 0,47 | 23,0 | |
| C 2/II | 250 °C/$N_2$ 2 h | 79 | 38 | 0,48 | 24,4 | – |
| D 1/I | 150 °C/$N_2$ 2 h | 81 | 40 | 0,49 | 24,4 | 5,3 |
| D 1/II | 250 °C/$N_2$ 2 h | 82 | 41 | 0,50 | 25,3 | 5,6 |
| D 1/III | 350 °C/$N_2$ 2 h | 83 | 42 | 0,51 | 25,4 | 7,6 |

Beispiel E 1

900 Teile eines gemäss Beispiel A 1/I hergestellten Materials werden in einer Strahlkugelmühle mit 225 Teilen einer 20%igen Lösung eines Copolymerisats aus 80% Vinylchlorid, 10% Dimethylmaleinat und 10% Diäthylmaleinat in einem Gemisch aus gleichen Teilen Tetrahydrofuran und Dioxan, 808 Teilen einer 13%igen Lösung eines thermoplastischen Polyesterurethans aus Adipinsäure, 1,4-Butandiol und 4,4'-Diisocyanatodiphenylmethan in einem Gemisch aus gleichen Teilen Tetrahydrofuran und Dioxan, 54 Teilen Sojalecithin, 0,9 Teilen eines handelsüblichen Silikonöls, 1,8 Teilen Hydrochinon, 1,8 Teilen Butylstearat, 9 Teilen Isostearinsäure und 620 Teilen des genannten Lösungsmittelgemisches gemischt und dispergiert. Danach wird die Dispersion mit 1,5% 4,4'-Diisocyanatodiphenylmethan versetzt, filtriert und in bekannter Weise auf eine 6 µm dicke Polyäthylenterephthalatfolie in einer solchen Stärke aufgetragen, dass nach dem Ausrichten der nadelförmigen Teilchen durch Vorbeiführen an einem Magnetfeld und anschliessendem Trocknen eine Magnetschicht in der in Tabelle 3 angegebenen Schichtstärke D[µm] verbleibt.

Die magnetischen Eigenschaften, wie die Koerzitivfeldstärke $H_c$[kA/m], Remanenz $M_r$[mT], Sättigung $M_m$[mT] und relative Remanenz $M_r/M_m$ werden in einem Messfeld von 160 kA/m bestimmt und sind in Tabelle 3 aufgeführt, ebenso die an einem aus der beschichteten Folie geschnittenen Magnetband in Anlehnung an DIN 45 512 gegen das Bezugsband T 308 S bei einer Aufzeichnung von 10 kHz, gemessenen elektroakustischen Eigenschaften wie Höhenaussteuerbarkeit $A_H$, dem maximalen Bandfluss, und Höhenempfindlichkeit $E_H$.

Beispiel E 2

Es wird wie bei Beispiel E 1 verfahren, jedoch wird als magnetisches Material ein solches gemäss Beispiel A 3/IV eingesetzt. Die Messergebnisse sind in Tabelle 3 aufgeführt.

Beispiel E 3

Es wird wie bei Beispiel E 1 verfahren, jedoch wird als magnetisches Material ein solches ge-

mäss Beispiel A 4/II eingesetzt. Die Messergebnisse sind in Tabelle 3 aufgeführt.

Vergleichsversuch E 4
Es wird wie bei Beispiel E 1 verfahren, jedoch

Tabelle 3

| | $H_c$ | $M_r$ | $M_m$ | $M_r/M_m$ | $d[\mu m]$ | $A_H$ | $E_H$ |
|---|---|---|---|---|---|---|---|
| E 1 | 29,4 | 167 | 203 | 0,82 | 5,2 | +1,8 | +1,4 |
| E 2 | 29,7 | 146 | 182 | 0,80 | 4,0 | +3,3 | +1,2 |
| E 3 | 34,5 | 146 | 182 | 0,80 | 4,3 | +5,0 | +1,8 |
| E 4 | 22,8 | 155 | 182 | 0,85 | 4,5 | −0,2 | −0,3 |

## Patentansprüche

1. Nadelförmiges magnetisches Eisenoxid, das aus einem Kern aus Gamma-Eisen(III)oxid besteht, dadurch gekennzeichnet, dass es eine diesen Kern umhüllenden äusseren Schicht aus einem mit Cadmiumionen modifizierten Magnetit aufweist und, bezogen auf das gesamte durch Umhüllung modifizierte Gamma-Eisen(III)-oxid, 0,1 bis 15 Gewichtsprozent Eisen(II)ionen sowie 0,1 bis 10 Gewichtsprozent Cadmium(II)ionen enthält.

2. Verfahren zur Herstellung der nadelförmigen magnetischen Eisenoxide gemäss Anspruch 1, dadurch gekennzeichnet, dass nadelförmiges Gamma-Eisen(III)-oxid in Wasser suspendiert, unter Inertgasatmosphäre dieser Suspension zugegebene Eisen(II)ionen sowie Cadmiumionen mittels wässriger Basen bei Temperaturen zwischen 8 und 100 °C als Hydroxide ausgefällt, der gesamte Feststoffanteil abfiltriert, mit Wasser neutral gewaschen und während 1/2 bis 10 Stunden bei einer Temperatur unterhalb 360 °C getrocknet und getempert wird.

3. Verfahren gemäss Anspruch 2, dadurch gekennzeichnet, dass nadelförmiges Gamma-Eisen(III)oxid in Wasser, welches Cadmiumionen gelöst enthält, suspendiert wird, durch Zugabe wässriger Basen bei einer Temperatur zwischen 8 und 100 °C zuerst Cadmiumionen sowie die anschliessend unter Inertgasatmosphäre zugesetzten Eisen(II)ionen als Hydroxide auf das Gamma-Eisen(III)oxid aufgefällt, der gesamte Feststoffanteil abfiltriert, mit Wasser neutral gewaschen und während 1/2 bis 10 Stunden bei Temperaturen zwischen 100 und 360 °C getrocknet und getempert wird.

4. Verfahren gemäss Anspruch 3, dadurch gekennzeichnet, dass die Zugabe der wässrigen Base in einer solchen Menge erfolgt, dass die Suspension nach dem Ausfällen der Eisen(II)- sowie Cadmiumhydroxide einen pH-Wert grösser 10 besitzt.

5. Verfahren gemäss Anspruch 3 oder 4, dadurch gekennzeichnet, dass der abfiltrierte und mit Wasser neutral gewaschene Feststoffanteil während 1/2 bis 10 Stunden in Inertgasatmosphäre bei Temperaturen zwischen 150° und 350 °C getrocknet und getempert wird.

6. Verwendung der nadelförmigen magnetischen Eisenoxide gemäss Anspruch 1, zur Herstellung von magnetischen Aufzeichnungsträgern.

## Revendications

1. Oxyde de fer magnétique, aciculaire, constitué d'un noyau en oxyde de fer (III)–γ, caractérisé par le fait qu'il comporte une couche extérieure, enrobant ce noyau, en une magnétite modifiée par des ions cadmium et contient, rapporté à la totalité de l'oxyde de fer (III)–γ, modifié par enrobage, 0,1 à 15% en poids d'ions fer (II), ainsi que 0,1 à 10% en poids d'ions cadmium (II).

2. Procédé de préparation des oxydes de fer magnétiques, aciculaires selon la revendication 1, caractérisé par le fait qu'on suspend dans de l'eau de l'oxyde de fer (III)–γ, aciculaire, on fait précipiter, sous forme d'hydroxydes, des ions fer (II) ainsi que des ions cadmium ajouté à cette suspension, sous atmosphère de gaz inerte, au moyen de bases aqueuses, à des températures comprises entre 8 et 100 °C, on sépare par filtration toute la portion solide, on lave à neutralité avec de l'eau et on sèche et met en équilibre thermique, pendant 1/2 à 10 heures à une température inférieure à 360 °C.

3. Procédé selon la revendication 2, caractérisé par le fait qu'on met en suspension dans l'eau de l'oxyde de fer (III)–γ, aciculaire, qui contient dissous des ions cadmium, on fait précipiter sur l'oxyde de fer (III)–γ, sous forme d'hydroxydes, par addition de bases aqueuses, à une température comprise entre 8 et 100 °C, tout d'abord des ions cadmium ainsi que les ions fer (II) ajoutés ensuite sous atmosphère de gaz inerte, on sépare par filtration toute la portion solide, on lave à neutralité à l'eau et on sèche et met en équilibre thermique pendant 1/2 à 10 heures, à des températures comprises entre 100 et 360 °C.

4. Procédé selon la revendication 3, caractérisé par le fait que l'addition des bases aqueuses est effectuée en quantité telle que la suspension présente, après la précipitation des hydroxydes de fer (II) ainsi que de cadmium, un pH supérieur à 10.

5. Procédé selon la revendication 3 ou 4, caractérisé par le fait que la portion solide, séparée par filtration et lavée à neutralité avec de l'eau, est séchée et mise en équilibre thermique pendant 1/2 à 10 heures, en atmosphère de gaz inerte, à des températures comprises entre 150° et 350 °C.

6. Utilisation des oxydes de fer, magnétiques, aciculaires, selon la revendication 1, pour la préparation de supports d'enregistrement magnétiques.

**Claims**

1. An acicular magnetic iron oxide comprising a core of gamma-iron(III) oxide, which magnetic iron oxide has a shell of a magnetite modified with cadmium ions surrounding the said core, and contains, based on total gamma-iron(III) oxide modified by the surrounding shell, from 0,1 to 15 per cent by weight of iron(II) ions and from 0,1 to 10 per cent by weight of cadmium(II) ions.

2. A process for the manufacture of an acicular magnetic iron(III) oxide as claimed in claim 1, wherein acicular gamma-iron(III) oxide is suspended in water, iron(II) ions and cadmium ions are precipitated as hydroxides onto the acicular gamma-iron(III) oxide by means of an aqueous base under an inert gas atmosphere at from 8 to 100 °C, and all the solids are filtered off, washed neutral with water and dried and heated for from 1/2 to 10 hours at below 360 °C.

3. A process as claimed in claim 2, wherein acicular gamma-iron(III) oxide is suspended in water which contains dissolved cadmium ions, an aqueous base is added so as to precipitate, at from 8 to 100 °C, first the cadmium ions and then the iron(II) ions, subsequently added under an inert gas atmosphere, as hydroxides onto the gamma-iron(III) oxide, and all the solids are filtered off, washed neutral with water and dried and heated for from 1/2 to 10 hours at from 100 to 360 °C.

4. A process as claimed in claim 3, wherein the aqueous base is added in such an amount that the suspension, after precipitation of the iron(II) and cadmium hydroxides, has a pH of more than 10.

5. A process as claimed in claim 3 or 4, wherein the solids which have been filtered off and washed neutral with water are dried and heated for from 1/2 to 10 hours in an inert gas atmosphere at from 150 to 350 °C.

6. The use of an acicular magnetic iron oxide as claimed in claim 1 for the production of magnetic recording media.